Europäisches Patentamt

European Patent Office

Office européen des brevets

(11) Numéro de publication: **0 258 084**
**A1**

## (12) DEMANDE DE BREVET EUROPEEN

(21) Numéro de dépôt: **87401671.0**

(22) Date de dépôt: **16.07.87**

(51) Int. Cl.⁴: **H 04 M 11/02**

(30) Priorité: **21.07.86 FR 8610521**

(43) Date de publication de la demande:
**02.03.88 Bulletin 88/09**

(84) Etats contractants désignés:
**BE CH DE ES FR GB IT LI LU NL SE**

(71) Demandeur: **NIRA, Société Anonyme dite**
**16, rue des Peupliers**
**F-92000 Nanterre (FR)**

(72) Inventeur: **Cohen, Charly**
**24, rue du Chemin-Vert**
**F-93000 Bobigny (FR)**

(74) Mandataire: **Dawidowicz, Armand**
**30, Boulevard du Château**
**F-92200 Neuilly (FR)**

(54) Dispositif de recherche de personnes associé à un autocommutateur téléphonique.

㊗ Le dispositif selon l'invention est caractérisé par le fait qu'il comprend une armoire de commutation comprenant au moins une ligne de réponse (LR) de l'autocommutateur (AR), un récepteur radio portatif (RRP) affecté à un poste récepteur (PT) et comportant un moyen d'appel sonore et/ou lumineux et un dispositif d'affichage, un dispositif d'activation (AC) du système de recherche (ARC) en cas d'appel dudit poste récepteur (PT1) et d'absence de réponse après une durée prédéterminée programmable, le dispositif d'activation (AC) effectuant la recherche d'une ligne de réponse (LR) disponible et sa réservation, l'envoi au récepteur radio portatif (RRP) d'un message d'appel avec affichage de la ligne de réponse (LR) affectée, l'appel de ladite ligne de réponse (LR) affectée produisant la mise en relation directe avec le demandeur par l'autocommutateur (AT).

Application à la recherche de personnes.

FIG. 3

EP 0 258 084 A1

## Description

### Dispositif de recherche de personnes associé à un autocommutateur téléphonique.

L'invention concerne un dispositif de recherche de personnes associé à un autocommutateur téléphonique.

On connaît des dispositifs de recherche de personnes grâce auxquels l'usager, porteur d'un petit récepteur, peut être appelé à distance, en général par émission d'un signal sonore sur son récepteur. L'usager doit alors appeler, d'un poste téléphonique, le central téléphonique ou l'opérateur du système de recherche, qui lui communique un message. Ces dispositifs ont été perfectionnés par l'utilisation d'un pupitre d'appel programmable et d'un dispositif d'affichage sur le récepteur, ce qui permet d'adresser un message explicite, par exemple demande d'appeler un poste affiché, appel d'urgence, etc. Des systèmes analogues ont été développés pour des transmissions à distance, en dehors de l'enceinte où est située la station émettrice.

Ces dispositifs connus présentent tous l'inconvénient de ne pas permettre la transmission d'un appel téléphonique en obligeant la personne appelée à rappeler son correspondant, ce qui est souvent malcommode, sinon impossible, et prend un certain temps.

La présente invention vise à permettre, avec un dispositif de recherche de personnes, de transmettre sans intermédiaire un appel téléphonique à une personne appelée qui ne se trouve pas auprès de son poste téléphonique récepteur.

A cet effet, le dispositif selon l'invention est caractérisé par le fait qu'il comprend une armoire de commutation comprenant au moins une ligne de réponse de l'autocommutateur, un récepteur radio portatif affecté à un poste récepteur et comportant un moyen d'appel sonore et/ou lumineux et un dispositif d'affichage, un dispositif d'activation du système de recherche en cas d'appel dudit poste récepteur et d'absence de réponse après une durée prédéterminée programmable, le dispositif d'activation effectuant la recherche d'un ligne de réponse disponible et sa réservation, l'envoi au récepteur radio portatif d'un message d'appel avec affichage de la ligne de réponse affectée, l'appel de ladite ligne de réponse affectée produisant la mise en relation directe avec le demandeur par l'autocommutateur.

Le dispositif selon l'invention permet, à partir de tout autocommutateur et sans modification de celui-ci, de transmettre un appel à une personne absente sans intervention d'une autre personne.

L'invention sera bien comprise à la lecture de la description suivante faite en se référant au dessin annexé dans lequel:

- la figure 1 est un schéma de principe illustrant le fonctionnement du dispositif de l'invention en cas de réponse directe de l'abonné appelé,
- la figure 2 est analogue à la figure 1, pour le cas d'une recherche de l'abonné appelé,
- la figure 3 est un schéma général par blocs d'une installation comprenant un dispositif de recherche selon un exemple de réalisation de l'invention, illustrant le système d'appel,
- la figure 4 est un schéma par blocs du dispositif de recherche associé à un autocommutateur, et
- la figure 5 est un schéma par blocs plus détaillé du dispositif de recherche et de transmission des figures 3 et 4.

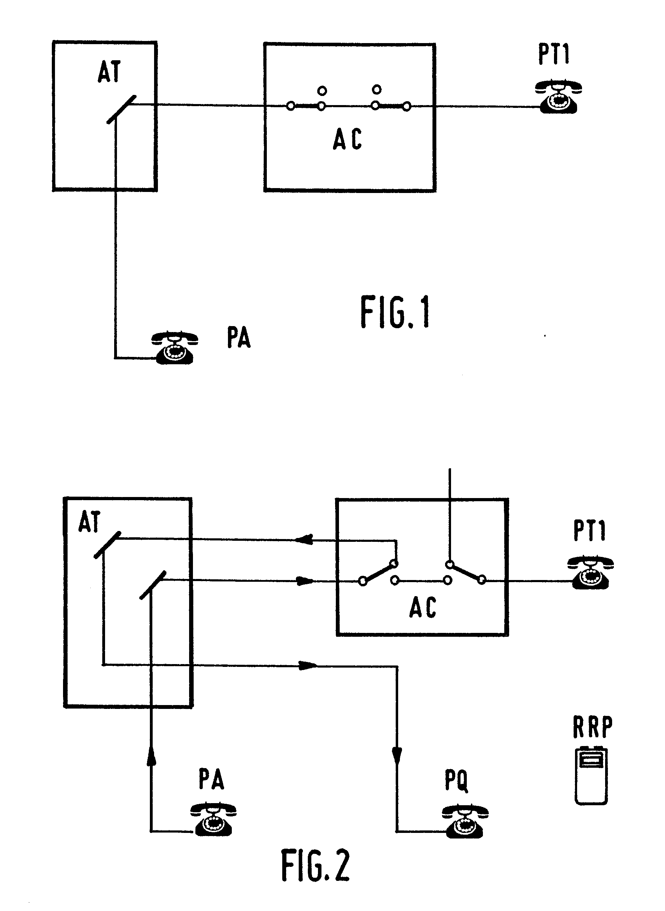

En se référant tout d'abord aux figures 1 et 2, une armoire de commutation AC est interposée entre l'autocommutateur AT et les postes d'abonnés PT1 reliés à la recherche de personnes.

En cas d'appel, depuis un poste appelant PA, d'un des postes d'abonnés PT reliés à la recherche de personnes, deux situations peuvent se présenter:

1) l'abonné recherché décroche son récepteur et la communication est établie directement avec le demandeur (figure 1);

2) l'abonné ne décroche pas son récepteur; après un nombre de sonneries prédéterminé et programmable, le dispositif de l'invention est commuté sur la recherche de personnes (figure 2) qui effectue un certain nombre d'opérations, en particulier l'émission d'un message radio vers un récepteur radio portatif RRP, puis la mise en communication directe, à travers l'armoire de commutation AC, de l'abonné appelant PA avec l'abonné recherché qui aura appelé, par un poste quelconque PQ un numéro affiché sur le récepteur radio portatif RRP. L'armoire de commutation AC aura commuté la ligne d'appel LA sur une ligne de réponse LR préalablement réservée et correspondant au numéro affiché sur le récepteur radio portatif RRP.

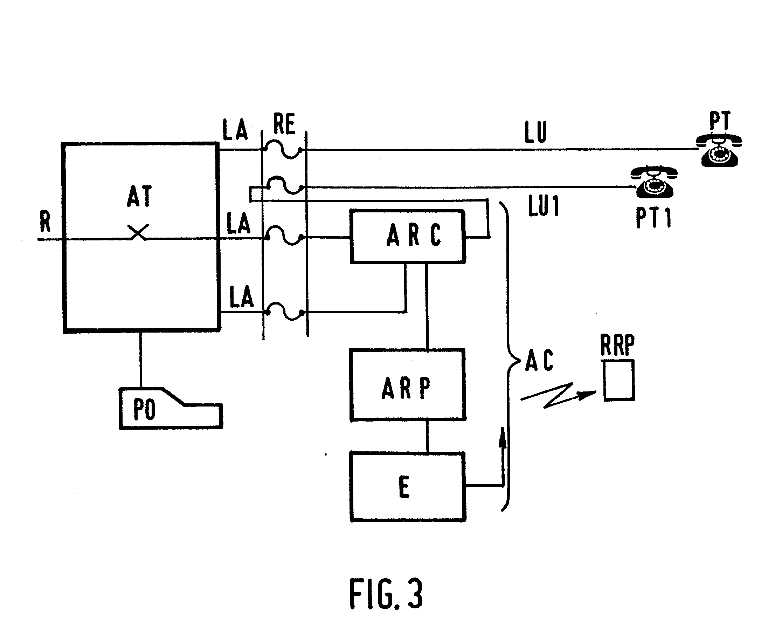

La figure 3 illustre de manière schématique l'ensemble de l'installation comportant le dispositif selon l'invention. L'autocommutateur téléphonique AT est relié au réseau R et à un poste d'opérateur PO. Un répartiteur RE est raccordé d'une part par des lignes d'abonné LA à l'autocommutateur AT et, d'autre part, à des lignes d'usager LU.

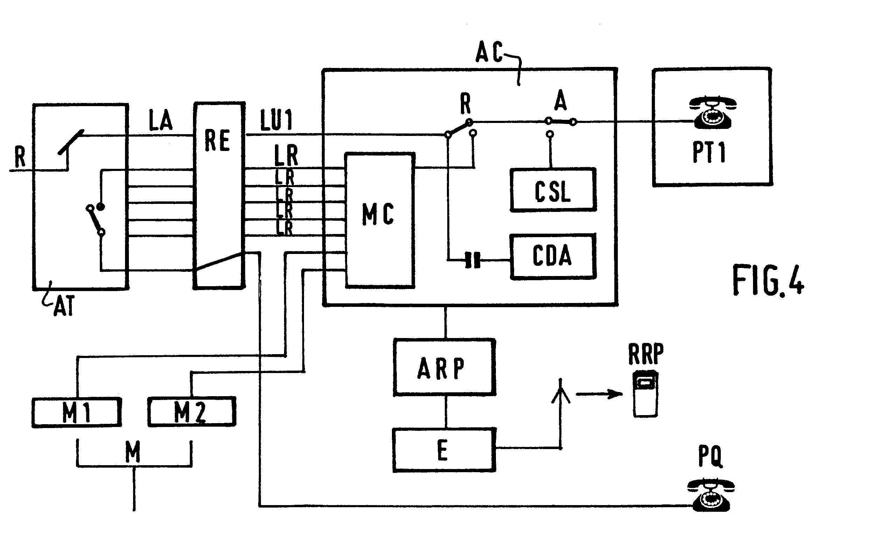

Certaines des lignes d'usager, LU1, correspondant aux postes PT1 équipés du système de recherche de personnes, sont reliées au répartiteur RE à travers le dispositif de l'invention AC. Celui-ci comprend une armoire de coïncidence ARC, une armoire de recherche de personnes ARP, au moins un émetteur radio E et des récepteurs radios portatifs affectés chacun à un poste téléphonique PT1. Un certain nombre de lignes de réponse LR, cinq dans l'exemple de la figure 4, sont réservées au dispositif AC pour effectuer la réponse à un appel en cas de non réponse, comme il sera expliqué plus loin. Les lignes de réponse réservées LR sont reliées à une matrice de coïncidence MC (figure 4) de l'armoire de coïncidence AC. L'armoire de coïncidence AC est elle-même reliée à une armoire de recherche de personnes ARP commandant un émetteur E pouvant émettre un message vers un des récepteurs radios portatifs RRP.

L'armoire de coïncidence AC comprend en outre une cellule de signalisation de ligne CSL qui est commutée par un relais A en cas d'occupation de la ligne. Elle contient de plus un circuit de détection d'appel CDA.

La matrice de coïncidence est reliée à deux magnétophones M dont l'un émet un message d'attente M1 pendant la recherche de personnes et le second un message M2 signalant l'indisponibilité de la personne appelée.

Le fonctionnement est le suivant.

Quand le poste PT1 est raccroché, la tension sur la ligne est supérieure à une valeur déterminée (par exemple 48V) alors que cette tension est inférieure à cette valeur lorsque le poste est décroché. Un dispositif de couplage, lorsque le poste est raccroché, ne conduit pas et l'unité centrale, reconnaissant cet état, active un relais de sorte que le poste PT1 est alimenté par l'alimentation du système (48V par exemple). Au décrochage, la tension en ligne devient inférieure à la tension déterminée (48V), et le système de couplage conduit et informe l'unité centrale qui libère le relais et commute automatiquement le poste PT1 sur l'autocommutateur AT.

Si le poste appelé PT1, raccroché, ne répond pas après un nombre de sonneries déterminé, programmable, un relais R est activé et commute la ligne d'usager LU1 sur le système AC. Le système recherche alors une ligne de réponse LR disponible et la réserve; si aucune ligne de réponse LR n'est disponible, le dispositif attendra qu'une ligne de réponse LR se libère. Durant cette phase, le demandeur percevra la tonalité de retour d'appel.

L'unité centrale interroge le système de recherche de personnes pour connaître l'état actuel du récepteur radio portatif RRP correspondant. Si ce récepteur est rangé dans un chargeur principal, non représenté, (personne absente), le récepteur ne sonnera pas et le demandeur perçoit un autre type de message lui indiquant que son correspondant est absent. Dès que le demandeur raccroche, le système est définitivement libéré.

Si le récepteur radio portatif RRP est en possession de l'usager, la recherche de personnes ARP est activée et transmet un message produisant un signal sonore sur ce récepteur et l'affichage de la ligne de réponse LR préalablement réservée et sur laquelle la personne demandée est attendue. Le demandeur reçoit le message M1.

Lorsque cette personne appelle, depuis un poste quelconque PQ, le numéro correspondant à cette ligne de réponse réservée, le système provoquera la mise en relation directe avec le demandeur.

Si le poste appelé PT1 est décroché, le relais A est commuté sur la cellule de signalisation de ligne CSL qui émet le message d'occupation.

Si le demandé décroche son poste après le nombre de sonneries prédéterminé, c'est-à-dire alors que l'appel a été pris en charge par le système, il est mis directement en communication avec le demadeur, sans passer par le système et la ligne réservée est libérée.

Si le demandé laisse écouler un temps de réponse, prédéterminé et réglable, sans répondre, le demandeur reçoit le message M2. Pour une certaine catégorie d'abonnés ayant la possibilité dce recevoir des messages phoniques, ce message M2 indique au demandeur qu'il peut envoyer un message en phonie. Le récepteur RRP se met automatiquement en écoute et s'arrête automatiquement à la fin du message (limité par programmation). On peut également prévoir une possibilité d'émission phonique par le récepteur radio portatif RRP. Si le demandé éloigné de son poste a été connecté à travers le dispositif avec son demandeur et qu'un tiers veut alors utiliser le poste du demandé, ce tiers recevra une tonalité d'occupation. La ligne sera rétablie dès la fin de la conversation.

Durant le temps de recherche, si la communication est interceptée par un tiers, le demandé sera informé par un appel sur son récepteur RRP et un message.

Si le demandeur ne veut pas attendre la réponse et qu'il raccroche, le demandeur est averti par un appel et un message sur son récepteur RRP.

Chaque abonné a la possibilité d'appeler son propre récepteur RRP associé à sa ligne et d'envoyer un message.

Au niveau du système d'émission chaque émetteur peut se signaler en faute.

Pour les lignes d'abonnés, le dispositif est équipé d'un système de test par interrogation cyclique, permettant de déceler une ligne en défaut et d'afficher son numéro sur un récepteur d'astreinte.

Le personnel de maintenance responsable peut isoler cette ligne du dispositif et la rétablir dans sa fonction purement téléphonique par programmation sur la console sans aucune intervention physique au niveau du répartiteur. Cette possibilité peut également être utilisée pour d'autres applications particulières.

Bien entendu, en cas de défaut sur l'ensemble de l'installation, le rétablissement des fonctions téléphonique se fait dans tous les cas.

Il peut être nécessaire de prévoir une alimentation secourue par batteries au niveau de chaque émetteur synchrone piloté, ceci pour pallier toute coupure de secteur.

On peut également prévoir un système de test des lignes réservées pour les isoler en cas d'occupation ne correspondant pas à une réservation.

Pour permettre le fonctionnement du système à partir d'un central extérieur, les lignes de réponse réservées LR devront être de la catégorie "Sélection Directe à l'Arrivée" (SDA).

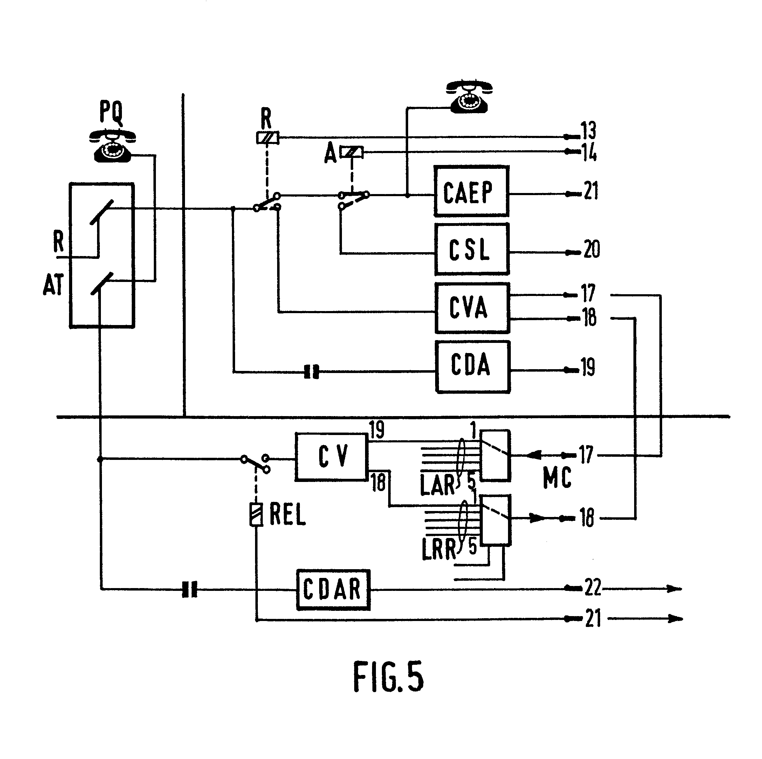

Le système est représenté plus en détail à la figure 5. Le relais A, commandé par la ligne 14, reçoit la sortie 21 d'une cellule d'analyse de l'état du poste, CAEP, et est commuté le cas échéant, sur la cellule de signalisation d'occupation de ligne CSL.

Un circuit de conversation abonné CVA, relié à l'autocommutateur AT par le relais de réponse R, commandé par une entrée 13, présente une voie de conversation 17 vers le demandé et une voie de conversation 18 vers le demandeur.

Un circuit de détection d'appel CDA émet sur une sortie 19 une information d'appel du poste vers le récepteur radio portatif (non représenté).

L'ensemble qui vient d'être décrit constitue une carte d'abonné représentée à la partie supérieure droite de la figure 5.

A la partie inférieure de cette figure 5 est représentée une carte réponse. La sortie 17 du circuit de conversation CVA est reliée à une ligne d'appel réservée LAR (la ligne 1 sur le dessin), tandis que son entrée 18 est reliée à la ligne de réponse LRR correspondante, dans des matrices de conversation MC. Les lignes LAR entrent dans un circuit de conversation de réponse CV dont sortent les lignes LRR, le circuit CV étant relié à l'autocommutateur AT par un relais de conversation REL commandé par la ligne 21. La sortie 22 d'un circuit de détection d'appel CDAR émet une confirmation de réponse à l'appel.

**Revendications**

1.- Dispositif de recherche de personnes associé à un autocommutateur téléphonique, caractérisé par le fait qu'il comprend une armoire de commutation comprenant au moins une ligne de réponse (LR) de l'autocommutateur (AR), un récepteur radio portatif (RRP) affecté à un poste récepteur (PT) et comportant un moyen d'appel sonore et/ou lumineux et un dispositif d'affichage, un dispositif d'activation (AC) du système de recherche (ARC) en cas d'appel dudit poste récepteur (PT1) et d'absence de réponse après une durée prédéterminée programmable, le dispositif d'activation (AC) effectuant la recherche d'une ligne de réponse (LR) disponible et sa réservation, l'envoi au récepteur radio portatif (RRP) d'un message d'appel avec affichage de la ligne de réponse (LR) affectée, l'appel de ladite ligne de réponse (LR) affectée produisant la mise en relation directe avec le demandeur par l'autocommutateur (AT).

2.- Dispositif selon la revendication 1, caractérisé par le fait qu'il comprend un chargeur principal pour lesdits récepteurs radio portatifs (RRP), et des moyens de détection d'absence d'un récepteur (RRP) dans ledit chargeur activant des moyens de signalisation d'absence.

3.- Dispositif selon l'une des revendications 1 et 2, caractérisé par le fait qu'il comprend une cellule d'analyse de l'état du poste (CAEP) reliée au poste récepteur (PT1).

4.- Dispositif selon l'une des revendications 1 à 3, caractérisé par le fait qu'il comprend un circuit de détection d'appel (CDA) relié à l'autocommatateur (AT).

5.- Dispositif selon l'une des revendication 1 à 4, caractérisé par le fait qu'il comprend un circuit de conversation abonné (CVA) commandé par un relais de réponse (R) et relié à un circuit de conversation de réponse (CV) à travers des matrices de conversation (MC) comprenant les lignes d'appel (LAR) et de réponse (LRR) réservées, ledit circuit de conversation de réponse (CV) étant relié à l'autocommutateur (AT) par l'intermédiaire d'un relais de conversation (REL) commandé par un circuit de détection d'appel (CDAR) de la ligne d'appel réservée (LAR).

6.- Dispositif selon l'une des revendications 1 à 5, caractérisé par le fait que certains au moins des récepteurs radios portatifs (RRP) sont équipés en réception phonique.

7.- Dispositif selon la revendication 6, caractérisé par le fait que certains au moins des récepteurs radios portatifs (RRP) équipés en réception phonique sont équipés en émission phonique.

8.- Dispositif selon l'une des revendications 1 à 7, caractérisé par le fait qu'il comporte des moyens de test par interrogation cyclique des lignes de réponse réservées (LR).

9.- Dispositif selon l'une des revendications 1 à 8, caractérisé par le fait qu'il comprend des moyens de test par interrogation cyclique des lignes d'abonnés (LA).

10.- Dispositif selon l'une des revendications 1 à 9, caractérisé par le fait que les lignes de réponses réservées (LR) sont de la catégorie "Sélection Directe à l'Arrivée" (SDA).

0258084

FIG.1

FIG.2

0258084

FIG.3

FIG.4

PT1

RRP

PQ

AC

CSL

CDA

A

R

MC

ARP

E

RE

LU1

LR

LA

AT

R

M1

M2

M

0258084

FIG.5

Office européen
des brevets

**RAPPORT DE RECHERCHE EUROPEENNE**

Numero de la demande

EP 87 40 1671

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | TELCOM REPORT, vol. 6, no. 1, février 1983, pages 23-28, Passau, DE; P. MÜNKEMER; "Personensuchen über das Kommunikationssystem EMS" * Page 24, colonne de droite, lignes 1-30; figure 3 * | 1,5-7 | H 04 M 11/02 |
| A | SIEMENS-ZEITSCHRIFT, vol. 46, no. 8, août 1972, pages 663-669, Erlange, DE; M. ALBRECHT et al.: "Personensuchanlagen in Verbindung mit Fernsprech-Nebenstellenanlagen der ESK-Crosspoint-Technik" * Page 664, colonne de droite, ligne 33 - page 665, ligne 21; page 667, colonne de droite, lignes 27-35; figure 3 * | 1,2,5 | |
| A | DE-A-3 008 288 (SIEMENS) * Page 6, ligne 5 - page 7, ligne 35 * | 1,5 | |
| A | DE-A-1 566 826 (TELEFUNKEN) * Page 2, ligne 1 - page 3, ligne 21 * | 13,4 | DOMAINES TECHNIQUES RECHERCHES (Int. Cl.4) H 04 M H 04 Q |

Le présent rapport a été établi pour toutes les revendications

| Lieu de la recherche | Date d'achèvement de la recherche | Examinateur |
|---|---|---|
| LA HAYE | 15-10-1987 | MIKKELSEN C. |